Europäisches Patentamt

European Patent Office

Office européen des brevets

(19)

(11) Publication number: **0 030 411**
**B1**

(12) # EUROPEAN PATENT SPECIFICATION

(45) Date of publication of patent specification: **21.09.83**

(51) Int. Cl.³: **F 15 B 1/047, F 16 L 55/04**

(21) Application number: **80303599.7**

(22) Date of filing: **13.10.80**

(54) **Hydropneumatic pulse interceptor.**

(30) Priority: **05.12.79 US 100697**
**14.02.80 US 121517**

(43) Date of publication of application:
**17.06.81 Bulletin 81/24**

(45) Publication of the grant of the patent:
**21.09.83 Bulletin 83/38**

(84) Designated Contracting States:
**AT BE CH DE FR GB IT LI LU NL SE**

(56) References cited:
**DE - A - 2 127 718**
**FR - A - 2 205 631**
**GB - A - 1 183 477**
**GB - A - 2 003 232**
**US - A - 3 484 893**
**US - A - 3 998 359**
**US - A - 4 108 209**
**US - A - 4 166 478**

(73) Proprietor: **Liquid Dynamics Incorporated**
**Box H**
**Rocky mount, North Carolina 27801 (US)**

(72) Inventor: **PACKER, Martin, Richard**
**741 Eagles Terrace**
**Rocky Mount (US)**

(74) Representative: **Daunton, Derek**
**Barlow, Gillett & Percival 94, Market Street**
**Manchester M1 1PJ (GB)**

Courier Press, Leamington Spa, England.

## Hydropneumatic pulse interceptor

This invention relates to hydropneumatic apparatus as used for pump pulsation damping, pipeline shock absorption, pipeline fluid thermal expansion compensation, and the like. While referred to as a hydropneumatic pulse interceptor, such an apparatus is also referred to as a hydropneumatic accumulator.

The invention is more particularly concerned with a hydropneumatic pulse interceptor of the kind (hereinafter referred to as "of the kind described") comprising a pressure vessel enclosing a flexible membrane dividing the interior of the vessel into first and second chambers, valve means connecting with the first chamber to permit the introduction of a compressible fluid (i.e. a gas) into said first chamber, substantially concentric inlet and outlet ports connecting with the second chamber and adapted for connection into a substantially-incompressible fluid (i.e. a liquid) line for said substantially-incompressible fluid to flow into and out of said second chamber to contact the membrane and thereby be subject to the influence of the compressible fluid, and an anti-extrusion plate carried by the membrane and disposed to prevent extrusion of the membrane into the ports whilst at all times permitting flow of the substantially-incompressible fluid between the ports.

In the pumping of hydraulic fluids, it is desirable to prevent the occurrence of cavitation within positive displacement pumping chambers. Cavitation occurs on the suction strokes of positive displacement pumps because of the need to generate energy to accelerate the flow of liquid into the pumping chamber. The energy necessary to accelerate this flow may be considerable in a situation involving a long length of suction line and, consequently, a substantial volume of liquid. The ambient pressure applied to the liquid may not be sufficient to cause the acceleration of the suction flow. In these circumstances, the suction stroke of the pump turns some of the liquid being pumped into vapour and hence, for at least a portion of the suction stroke, the pumping chamber is not being filled. As a result of these circumstances, part of the pump delivery stroke is merely dissipated and results in forcing the vapour back into solution. The pump plunger then effectively encounters a solid wall of liquid which causes an abrupt shock or pulse to be emitted from the discharge port of the pump.

It is known that when the circumstances mentioned above are prevented, the horsepower required to drive the pump can be reduced and the pump discharge flow can be sinusoidal rather than square-wave in character. Various types of hydropneumatic accumulators are known in art. United States patent No. 3 537 357 for example, teaches a hydropneumatic accumulator having a cylinder divided by a sliding piston which mounts a flexible diaphragm separating a compressible fluid from an incompressible fluid in the cylinder. Entry and exhaust ports are located at one end of the cylinder and on opposite sides of the longitudinal centre line of the accumulator. The compressible fluid gains contact with the diaphragm by passing through the centre of a conical end portion of the piston. While the hydropneumatic accumulator described in this United States patent No. 3 537 357 has found useful application in the industry, it has been noted that the conical end of the piston tends to deflect the pulses to some extent and this action prevents maximum cooperation of the incompressible fluid with the diaphragm. Furthermore, the arrangement described in the said United States patent No. 3 537 357 is not suitable for use with liquids containing solid particles. Nevertheless, the arrangement described in United States patent No. 3 537 357 is such that the mentioned diaphragm is prevented from extruding into the outlet port, which is a desirable characteristic for any accumulator utilizing a diaphragm.

United States Patent No. 3 483 893 teaches another type of hydropneumatic accumulator having a single port which operates as both an inlet port and an outlet port for admitting and discharging an incompressible fluid being influenced by the accumulator. This single port within the accumulator connects, through multiple passages, to the interior of a flexible bag which is adapted to receive the incompressible fluid and is surrounded by a chamber filled with compressible fluid. The construction taught in United States Patent No. 3 483 893 involves substantial costs because of having to make multiple entries for admitting the incompressible fluid to the bag and because of requiring an anti-extrusion valve plate for each of the seats associated with the several passages that admit and discharge the incompressible fluid to and from the bag, so as to prevent any portion of the bag being extruded through any of such multiple entries and passages. Also, the construction described in the said United States Patent No. 3 483 893 involves the provision of a bag of relatively complex cross-section in order to achieve arcuate swinging of the mentioned anti-extrusion valve plates towards and away from the seats associated with the multiple entries and passages.

United States Patent No. 4 166 478 teaches both single-port and twin-port-type hydropneumatic accumulators. The accumulator construction described in United States Patent No. 3 483 893 employs a bladder into which the incompressible fluid is admitted and from which such incompressible fluid is discharged as line pressure conditions change. A perforated rigid shell member projects upwardly into the bottom of the bladder to prevent extrusion of the bladder into the port when the incompressible liquid is being discharged.

Another type of hydropneumatic accumulator has been marketed by FLOWCHEM, Inc., of 1000 Instrument Drive, Rocky Mount, North Carolina 27801, United States of America, under the trademark HYDROFLEX. One version of the HYDROFLEX accumulator comprises a cylinder one end of which is closed by a closely-fitting plug which also supports a bag within the cylinder. The opposite end of the cylinder is fitted with a single port through which incompressible fluid is admitted and discharged into a chamber surrounding the bag, the bag being filled with a compressible fluid. The accumulator bag mounts, at its closed end opposite the single port, so-called button valve having a circular plate member of large diameter than the port and which acts to prevent extrusion of the bag into the port when the incompressible fluid is being discharged through the port from the cylinder. This version of the HYDROFLEX accumulator however does not provide either flow through the accumulator nor does it allow flow into the accumulator when the button valve is sealing the mentioned single port.

Within the last few weeks, prior to this application, there has appeared on the market another type of hydropneumatic accumulator sold by Flowchem Inc., and sold under the trademark JUMBOFLEX. The JUMBOFLEX accumulator, like the HYDROFLEX accumulator described above, has a cylinder with one end closed by a close-fitting plug that supports a bag containing a compressible fluid. The opposite end of the cylinder is provided with a single port for admitting and discharging the incompressible fluid being influenced by the accumulator. The JUMBOFLEX accumulator also incorporates an anti-extrusion button valve which operates in the manner described above for the HYDROFLEX accumulator. Increased tension on the bag when in its most extended position is provided by a suspension strap mounted within the bag and extending between the mentioned cylinder closure plug and a fitting within the bag and forming part of the button valve. The use of this suspension strap assists in preventing the button valve from prematurely covering the single port before the incompressible fluid has been discharged.

Also known, from published United Kingdom Specification No. 2003232 is a hydropneumatic accumulator of the kind described. Starting herefrom, the present invention has the manifold object of providing an accumulator having extreme pressure sensitivity, of providing an accumulator having a flow-through path enabling the extreme pressure sensitivity of the accumulator to act upon the flow, of providing an accumulator which does not intercept and shut off the flow when in a non-operational mode, of providing an accumulator having both inlet and outlet ports communicating with a portion of the cylinder adapted to receive and discharge the incompressible fluid and arranged so that the outlet port can be completely sealed without closing the inlet port, of providing an accumulator that can be manufactured from readily-available materials compatible with the range of different liquids normally encountered in the application of accumulators, and of providing an accumulator in which the bag or membrane employed to contain the compressible fluid is adapted to be mouldable from readily-available elastomers and in a form of relatively simple cross-section.

With these objects in view, the present invention provides a hydropneumatic accumulator of the kind referred to in the form of a pulse interceptor and characterised by a plurality of elastic members suspended within the vessel and attached to provide support at the side of the membrane facing the first chamber so that said members are stretched when the membrane moves close to said inlet and outlet ports and relax when the membrane moves away from said ports. The elastic members are preferably designed as straps.

In the arrangement of the invention, therefore the inlet and outlet ports are located so that the anti-extrusion plate can move to cover both ports to prevent extrusion of the membrane, which may be a bag or diaphragm, but without interrupting the flow between the ports. In all positions of the membrane, the substantially incompressible fluid is able to flow through the device. The incoming incompressible fluid effectively sees and comes into contact primarily only with that surface of the flexible membrane which faces the second chamber, thereby providing extreme sensitivity and minimizing the overall cost by reducing the need for special materials to compensate for corrosion effects and the like.

In the specific embodiments illustrated, the outlet port is provided by a flared tube which is surrounded by an annular inlet port. Among other advantages, this port arrangement establishes a vortex-type action within the device as the liquid flows therethrough, which enables the device to serve as a mixing device, in addition to performing the normal functions of fluid damping, fluid shock-absorbing, and fluid temperature compensation. The elastic members employed to support the membrane, which is preferably a diaphragm and allow the diaphragm to be attached to the vessel near to the exhaust port.

The invention will be described further, by way of example, with reference to the accompanying drawings, in which:

Fig. 1 is a block diagram illustrating a typical application of the hydropneumatic accumulator of the invention;

Fig. 2 is another block diagram illustrating how the hydropneumatic accumulator of the invention may be used as a mixing device;

Fig. 3 is a cross-sectional elevation illustrating a first embodiment of the accumulator of the invention, this embodiment utilizing a diaphragm-type membrane, the diaphragm being shown in solid lines in its lowest position and in dotted lines in its highest position;

Fig. 4 is a side view of one of the elastic support straps employed in the accumulator illustrated in Fig. 3;

Fig. 5 is a cross-sectional elevation illustrating a second embodiment of the hydropneumatic accumulator of the invention, this embodiment also utilizing a diaphragm-type membrane, but having an alternative form of one-way valve and a thicker-walled pressure vessel;

Fig. 6 is a fragmentary sectional elevation illustrating a third embodiment which is similar to that of Fig. 5 but which has a thin walled pressure vessel;

Fig. 7 is a fragmentary sectional view showing an embodiment having a modified pressure vessel which is clamped by a victaulic-type clamp device;

Fig. 8 is a fragmentary sectional view showing part of another embodiment which is similar to that of Fig. 5 but which has a protective thin liquid-impervious and gas-impervious layer or sheet, e.g. of Teflon, against the liquid side of its membrane, thereby to enable the membrane to be exposed to a wide range of chemicals that might otherwise attack the conventional diaphragm material; and

Fig. 9 is a fragmentary sectional elevation illustrating yet another embodiment which has a combined diaphragm and valve plate, of which the valve plate is encased by the diaphragm.

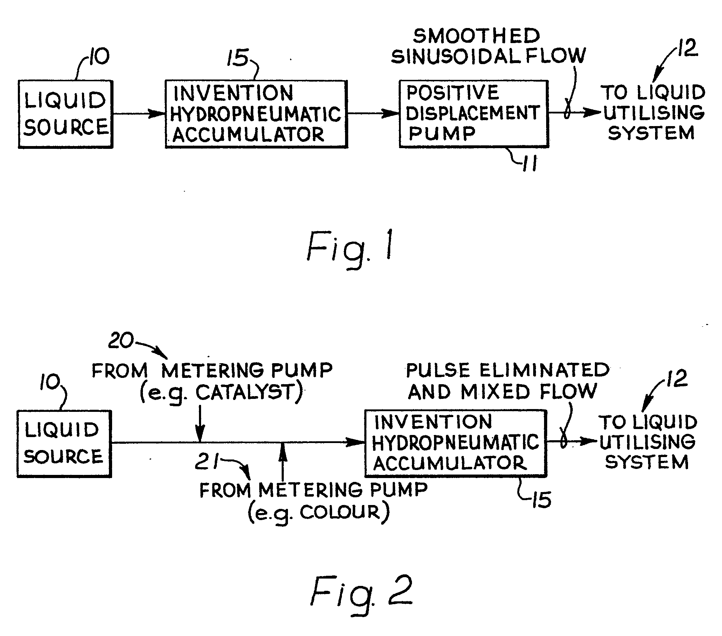

Figs. 1 and 2 of the drawings illustrate schematically how the hydropneumatic accumulator or pulse interceptor of the invention may be employed. Fig. 1 illustrates the more general application in which a substantially incompressible fluid from a liquid source 10, which may be at or above atmospheric pressure, is to be pumped, by a positive-displacement pump 11, to a system 12 which utilizes the fluid. In this application, the hydropneumatic accumulator of the invention, generally designated by the numeral 15, is installed between the source 10 and the pump 11 to provide a smoothed sinusoidal flow as the output of the pump 11 as represented in Fig. 1. The exact manner in which and how this result is obtained will be explained later.

Another and unique application of the hydropneumatic accumulator of the invention is schematically illustrated in Fig. 2. In this application, the fluid from the liquid source 10 in Fig. 2 is assumed to be combined with another fluid source from a metering pump 20 introducing, for example, a fluid catalyst. Further downstream, it is also assumed that an additional fluid is to be combined with the fluids from the liquid source 10 and the metering pump 20 as illustrated by a second metering pump 21 introducing, for example, a colour in fluid form. The three sources of fluids are then illustrated, in Fig. 2, as providing a combined fluid flow which is introduced to the hydropneumatic accumulator 15 of the invention. In this application, the accumulator 15 serves both to mix the three fluids and also to eliminate the fluid pulsation before going on to the liquid-utilizing system 12. Later description will deal with how both the mixing as well as the normal hydropneumatic functions are achieved.

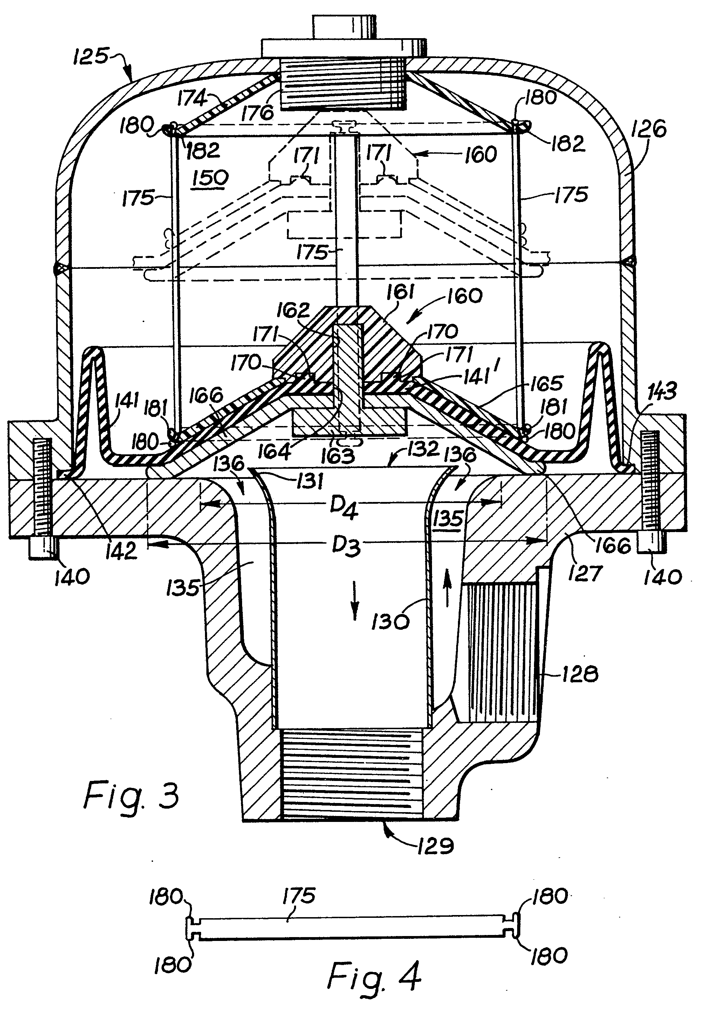

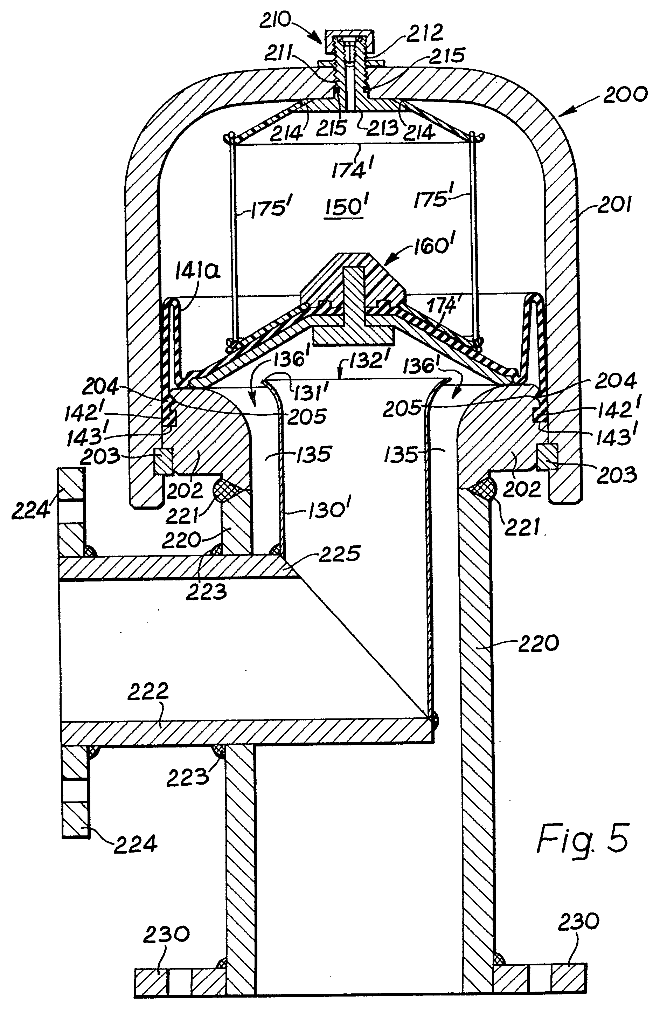

The invention is illustrated in one embodiment in Figs. 3 and 4 and in other embodiments in Figs. 5 to 9 with certain parts of the embodiments being interchangeable as later described.

Referring firstly to Figs. 3 and 4, the first embodiment of the hydropneumatic accumulator or pulse eliminator illustrated therein is generally designated by the numeral 125 and comprises a pressure vessel formed by an upper cup-shaped cylindrical cap 126 secured to a mating circular base block 127. The block 127 is provided with an inlet pipe connection 128 and an outlet pipe connection 129 adapted to make respective upstream and downstream connections. The outlet pipe connection 129, in turn, communicates with an outlet pipe member 130 terminating in a trumpet-shaped, flared end 131 surrounding an outlet port 132. The outlet pipe member 130, in turn, is accommodated within an annular cavity 135 hollowed out of base block 127 and surrounding the outlet pipe 130 in a concentric relation to provide the annular inlet port 136. The cap 126 and the block 127 are secured together by bolts 140 and effectively clamp in place the peripheral edge portion of a flexible diaphragm 141 having an annular bead 142 fitted sealingly in a groove 143 formed in an inner peripheral base portion of the cap 126. The diaphragm 141 thus establishes a first chamber 150 for holding a compressible fluid, e.g. a gas, and separating such compressible fluid from a substantially-incompressible fluid being influenced by the hydropneumatic accumulator 125. As further illustrated in Fig. 3, it will also be seen that the substantially-incompressible fluid being influenced is held below the diaphragm 141 in a second chamber 135 or void surrounding the inlet port 136 and the outlet port 132. The pressure within the first chamber 150 is normally held at about 70% of the line pressure of the incompressible fluid.

The diaphragm 141 supports an anti-extrusion plate assembly 160 which includes a nut 161 having a threaded recess 162 for receiving a bolt 163 which extends through a hole 164 formed in the centre of the diaphragm 141. The bolt 163, in turn, acts to clamp central portion 141 of the diaphragm 141' between an upper conically-shaped plate 165 in which the nut 161 seats and a lower conically-shaped plate 166. Fluid sealing is achieved by an annular rib 170 formed on the upper surface of the central portion 141' of the diaphragm 141, this rib 170 fitting into a corresponding groove 171 formed in the bottom face of the nut 161.

Auxiliary tensioned support for the diaphragm 141 is provided by a plurality of elastic strap members 175 suspended from an upper conically-shaped plate 174 threaded onto the base portion of a valve 176. The valve 176 is designed so as to act as a one-way valve for admission of a compressible fluid, such as nitrogen into the first chamber 150 and, like a tyre valve, is adapted to be released to reduce such pressure to an exact amount desired in a particular application. The straps 175 are moulded of an elastomeric material, e.g. natural or synthetic rubber, and have T-shaped tangs 180 which are fitted into suitable holes 181 and 182 drilled in the plate members 165 and 174. After insertion into the respective holes 181 and 182 the respective tangs 180 will naturally flex outwardly and thereby serve to retain the respective ends of the straps 175 in position as illustrated in the drawings. The straps 175 enable the diaphragm 141 to be secured to the base block 127 near the outlet port 132 and with the anti-extrusion plate assembly 160 acting to ensure that no portion of the diaphragm 141 can be extruded into the outlet port 132.

The accumulator provides a gas-backed membrane, i.e. the diaphragm 141, of extreme pressure sensitivity. It also ensures that the flow is through the accumulator, rather than remote from the accumulator, thereby enabling the extremely pressure-sensitive membrane i.e. the diaphragm 141, to act upon the flow. Another feature of the accumulator is that it does not intercept and shut off the flow when in a non-operational mode meaning that when the membrane, i.e. the diaphragm 141, is drawn to the maximum extent towards the outlet port of the accumulator. It will also be understood that the accumulator can be manufactured from readily-available materials to ensure compatibility with a wide range of liquid characteristics. Furthermore, the membrane, i.e. the diaphragm 141, can be moulded from conventional elastomers without requiring any adhesion or bonding operation for the production of the membrane or for its attachment to the containment vessel. In addition to the foregoing characteristics, it will also be appreciated that the described embodiment provides a construction which enables the diaphragm to be secured near the outlet and thereby reduce the amount of internal vessel surface exposed to the liquid flowing through the accumulator. This arrangement provides both an exceptionally high degree of membrane sensitivity since the liquid effectively only sees membrane surface when it enters the accumulator. A further advantage is achieved in that the construction cost can be reduced when the accumulator is applied to handling corrosive and like special fluids. Other advantages attach to the Fig. 5 to 9 constructions, as will emerge later.

A most important characteristic associated with the described embodiment is that the illustrated concentric inlet-outlet port arrangement, in conjunction with the illustrated anti-extrusion assembly arrangement, enables both of the ports to be covered by the valve plate, i.e. the lower plate 166 of Fig. 3, but without interfering with free flow of the liquid between the two ports. Thus, in the inoperative dotted-line position of the anti-extrusion plate assembly 160 shown in Fig. 3, it will be noted that outer diameter D-3 of the lower plate 166 exceeds, and thus provides an area greater than, the area provided by outer diameter D-4 of the inlet port 136. When the line pressure is greater than the gaseous pressure set on the gaseous side of the membrane, i.e. above the diaphragm 141, in the chamber 150 the membrane is enabled to contract as a result of flow coming into the accumulator as indicated in the dotted line position in Fig. 3. Also, the membrane, i.e. the diaphragms 141, can readily expand as appropriate to provide the intermittent discharge instantaneously required by the suction stroke of an adjacent pump as illustrated by the maximum expanded condition of the diaphragm 141 in Fig. 3.

In operation, the first suction stroke of the pump will cause the membrane, i.e. the membrane 141, to expand thus providing the suction volume required by the pump. The expansion of the gas on the gas side of the membrane results in a slight decrease in pressure within the gas chamber, i.e. within the chamber 150 above the diaphragm 141. As a result, replacement liquid will start to flow from the suction source. Upon the next suction stroke of the pump, a similar set of circumstances will apply. However, no substantial force will have been applied to prevent continuous flow from the suction source into the accumulator. Consequently, over a period of time, the flow rate from the suction source into the accumulator will become relatively constant at the mean level of requirement and the accumulator will emit intermittent short bursts of liquid at the velocity required by the suction stroke of the pump.

In practice, this will mean that the suction strokes of the pump will result in complete filling of the pumping chamber which now no longer has to accelerate the whole body of the liquid in order to obtain its supply. Therefore, since the pump is completely filled when the discharge stroke takes place, the primary part of that stroke will not merely be dissipated by causing liquid vapour to change back from vapour to liquid. Hence, there will not be a point in the discharge stroke when the pump plunger, piston or diaphragm meets a solid wall of liquid and, hence, suddenly emits a pulse with a shock wave imposed thereon. Thus, when the accumulator of the invention is applied to the suction side of a positive displacement pump, any pulsations emitted from the pump will be at a relatively low level which may be easily attenuated by another accumulator of the type provided by the invention but, then, can be of a much smaller size than would otherwise be necessary.

Another advantage and benefit of the accumulator of the invention arises when the accumulator is used in a liquid process system where liquid is being transmitted from a pump which has multiple displacers, plungers, pistons, diaphragms, vanes, lobes, or the like. These multiple elements necessarily cause a higher pulsation frequency and noise than could readily enter and leave and, thus, be attenuated e.g. by a single period pulse attenuating bottle attached to the liquid duct by a "T" connection. The accumulator of the invention, with its inlet-outlet flowthrough arrangement, thus provides a significant advance in the art in dealing with high frequency pulsations of this type.

The accumulator of the invention is also capable of intercepting a shock travelling down a line, which shock would otherwise by-pass a single-ported attenuating device. In this regard, it will be noted that use of a trumpet-shaped flared inner concentric duct, i.e. the outlet port 132 in Fig. 3 causes any pulse or shock entering the accumulator through the inlet port, i.e. through the inlet pipe connection 128 in Fig. 3, to be directed outwardly towards the space between the anti-extrusion valve plate, i.e. the valve plate 166 in Fig. 3, and the vessel wall and will, therefore, come immediately into contact with the membrane itself, i.e. the diaphragm 141, and hence be absorbed or attenuated.

The concentric inlet-outlet port arrangement illustrated in the drawings also provides a further benefit by creating a mixing action. In this regard, it may be noted that part of the flow of liquid coming into the accumulator will go freely into the interior of the vessel whereas other portions of the liquid are necessarily forced to flow around the outside of the concentric outlet pipe, i.e. the pipe 130 in Fig. 3, before entering the interior of the vessel 125 and therefore there is a time lapse effect imposed on the various constituent parts of the incoming flow. The trumpet-shaped flared opening provided on the outlet port, i.e. the port 132 in Fig. 3, effectively provides a funnel of naturally-decreasing cross-sectional area which imparts a vortex motion to the exiting flow. Within the vessel interior there will have occurred a dramatic velocity change for all portions of the fluid. It will, therefore, be appreciated that, if the fluid entering the accumulator comprises a number of different substances to be mixed, the combination of the varying flow path distances, the time lapse effect caused by flowing around the outside of the internal funnel, the velocity drop within the interior of the vessel, the sharp-edged annular orifice effect of the funnel lip, and the imparted vortex motion, all combine to subject the liquid to a thorough mixing. Thus, the hydropneumatic accumulator of the invention performs not only its normal functions, but also provides a mixing function which proceeds while performing those other functions for which the accumulator is primarily intended.

It will be noted that, in the described embodiment, the anti-extrusion plate assembly incorporates a bolt, i.e. the bolt 163 (Fig. 3), which extends through a hole in the centre of the membrane, i.e. the diaphragm 141. The moulding of the membrane with, in its centre, a hole through which the anti-extrusion valve plate bolt extends, is important as it enables the usual core of the mould tool to be stabilized at its substantially-unsupported end by a location pin within the mould tool's cavity. This stabilizing effect enables extremely high, typically 20,000 psi (about 1400 kg/sq.cm) to 40,000 psi (about 2800 kg/sq.cm) elastomer injection pressures to be used without the substantially unsupported end of the mould tool core moving and causing variations to the thickness of the membrane. These pressures are typically necessary when attempting to mould the membranes in chemical-resistant perfluoroelastomers. Thus, the accumulator of the invention is of special advantage in the process industries in which it is desirable to have membranes which are mouldable in all known elastomers to meet widely-varying compatibility requirements.

The sensitivity of the hydropneumatic pulse interceptor accumulator of the invention can be appreciated more particularly from Fig. 3. In a disposition between its illustrated full line and dotted line positions, it might be in equilibrium as a suction damper at the moment when flow from the inlet pipe connection 128 has just been overtaken by the beginning of the pump suction stroke velocity with flow going to the outlet connection 129. The diaphragm 141 will be in a more distended condition closer to the ports 136, 132, without closing them, when the accumulator is in use as a suction velocity stabilizer with a tank connected to the inlet and a pump intake to the outlet, supplying a fast slurp on the suction stroke. The diaphragm 141 will be in a more-compressed condition closer to the dotted line position when applied as a suction damper and at the end of the cycle, enabling continuous flow from a tank connected to the left but before the suction of the pump connected to the outlet has begun. The diaphragm 141 thus provides a high degree of response and sensitivity in the diaphragm embodiment illustrated in Figs. 3 and 4, as well as in other embodiments shown in Figs. 5 to 9 which will shortly be described.

As is well known in those skilled in the art, a hydropneumatic pulse interceptor and hydropneumatic accumulator apparatus, in general, is required to be adaptable to a variety of pressure and fluid conditions. Also, many fluids required to be handled have corrosive or other properties which require that the choice of material in contact with the fluid should be compatible with the nature of the fluid. Figs. 5 to 9 illustrate a range of constructions of the accumulator of the invention and thus illustrate the versatility of the invention to a relatively wide range of applications.

Referring to Fig. 5, accumulator 200 shown therein has a one-piece relatively-thick cap 201 and a relatively thick base block 202 which are secured together by a lock ring 203. ASME standards relate thickness to diameter. A diameter of 8″ (approximately 20 cm) may be assumed for reference.

Thus, a relatively thickwalled compressible-fluid-containing pressure vessel is formed as compared to the relatively thin-walled compressible-fluid-containing vessel shown in Fig. 3. A "thick" wall as referred to here might be, for example, 0.625 inches (about 1.6 cm) thick whereas a "thin" wall might be, for example, 0.150 inches (about 0.4 cm) thick.

Diaphragm 141a is substantially identical to the diaphragm 141 of Fig. 3 as previously described. However, it will be noted that the diaphragm 141a employs an annular bead 142′ fitting into groove 143′ in the base block 202 and an anchorage rib 204 fitted into an anchorage groove 205 in the base block 202. Anti-extrusion plate assembly 160′ is identical to the anti-extrusion plate assembly 160 of Fig. 3 and operates as previously described. The plate assembly 160′ is suspended from upper conically-shaped plate 174′ by elastic straps 175′. In the form of the invention previously described with reference to Fig. 3, four of such straps 175 were assumed to be employed whereas, in the construction of Fig. 5, only two such straps 175′ are employed. One-way valve structure 210 of the embodiment of Fig. 5 replaces the valve 176 of the Fig. 3 construction and is deemed best suited to relatively-high gas pressures. The valve 210 has a body portion 211 which has an external threaded portion 212 which is threadedly received by the cap 201 of the accumulator 200. Head portion 213 of the valve 210 is of sufficient diameter to maintain the upper conical-shaped plate 174′ thereon. Upper angled sides 214 mate with the interior angled sides of the plate 174′. An O-ring 215 is employed to eliminate any leakage between the cap 201 and the body 211. The valve mechanism is designed to act as a one-way valve for admission of a fluid into chamber 150′ and, like a tyre valve, is adapted to be released to reduce such pressure to an exact amount desired in any particular application.

The base block 202 is provided with a tubular extension 220 which is welded to the block 202 by a weld seam 221. The extension 220 has a flange 230 welded thereto at its outermost end, for receiving an appropriate pipe connection. An inlet pipe 222 extends through an appropriate opening in the extension 220 and is welded along a seam 223. A flange 224 is welded to outside end portion of the pipe 222, for making another pipe connection. Inside end portion 225 of the pipe 222 is angled and receives, in mating relation, the angled end of trumpet-shaped pipe member 130′. Flared end 131′ of the outlet pipe member 130′ is disposed within annular cavity 135′ hollowed out of base member 202 and surrounding pipe member 130′ in a concentric relation, to provide annular inlet port 136′. As previously stated, the cap 201 and the base block 202 are secured together by the lock ring 203 and effectively lock or clamp in place the annular bead 142′ and the anchorage rib 204 of the diaphragm 141a.

Diaphragm 141a thus establishes a chamber 150′ for holding a compressible fluid, e.g. a gas, and separating such compressible fluid from the substantially incompressible fluid being influenced by the hydropneumatic accumulator 200. As further illustrated in Fig. 5, it will be seen that the substantially incompressible fluid being influenced is held below the diaphragm 141a in the void surrounding the inlet port 136′ and the outlet port 132′. As with the constructions previously described, the pressure within chamber 150′ is normally held at about seventy percent of line pressure.

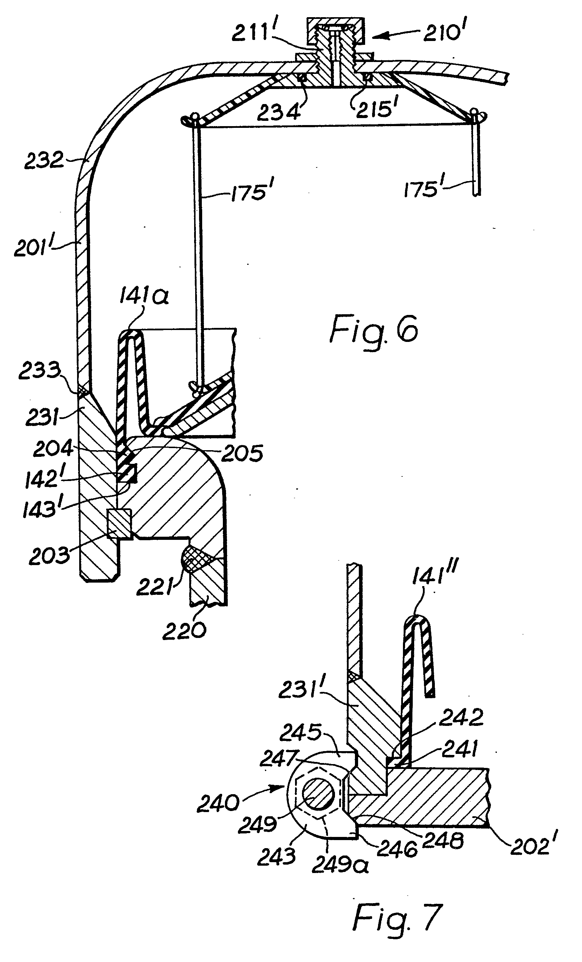

Fig. 5 thus illustrates use of a relatively-thick or heavy-walled cap, whereas Fig. 6 illustrates use of a relatively thin-walled cap for confining gas at a lesser pressure. In Fig. 6 cap 201′ is composed of a lower thick-walled section 231 welded by weld 233 to an upper thin-walled section 232. In order to fit into the thin-walled section 232, the valve 210 of Fig. 5 is modified slightly for the construction of Fig. 6. Valve 210′ for use with the thin-walled cap 201′ has a shortened-length body portion 211′. As a further modification as compared to Fig. 5, O-ring 215′ is seated in a groove 234 in head portion 213′ of the valve 210′. O-ring 215′ prevents leakage between the cap portion 232 and the head portion 213′. All other members, i.e. the diaphragm 141a, the plate 174′, the straps 175′, and the plate assembly 160′ are identical in structure and operation to those of the construction illustrated in Fig. 5. Thus, dependent on the application, either a thin wall or thick wall type gas pressure vessel may be provided for purposes of the invention.

Fig. 7 offers a further variation from the arrangements of Figs. 5 and 6. The lower portion 231 of the Fig. 6 embodiment is modified so that diaphragm 141″ is held in place by a portion 231′ against a modified base block 202′. Such an arrangement has a distinct advantage in the food industry where minimizing, and preferably elimination, of all grooves or other areas where food might collect is a prime necessity. For this purpose, victaulic-type clamps 240 are employed in the Fig. 7 construction as means for locking the base block 202' and the lower portion 231' together. The diaphragm 141" has an annular lip 241 which fits into a groove 242 in the lower portion 231'. The diaphragm 141" provides a tight fit between the diaphragm 141" and the base portion 202' and essentially eliminates any area that might otherwise collect food. The victaulic clamp 240 is composed of a pair of circular bands 243 having wedge members 245, 246 which fit with mating sloped edges 247, 248 and are held together by bolts 249 and nuts 249a in known manner.

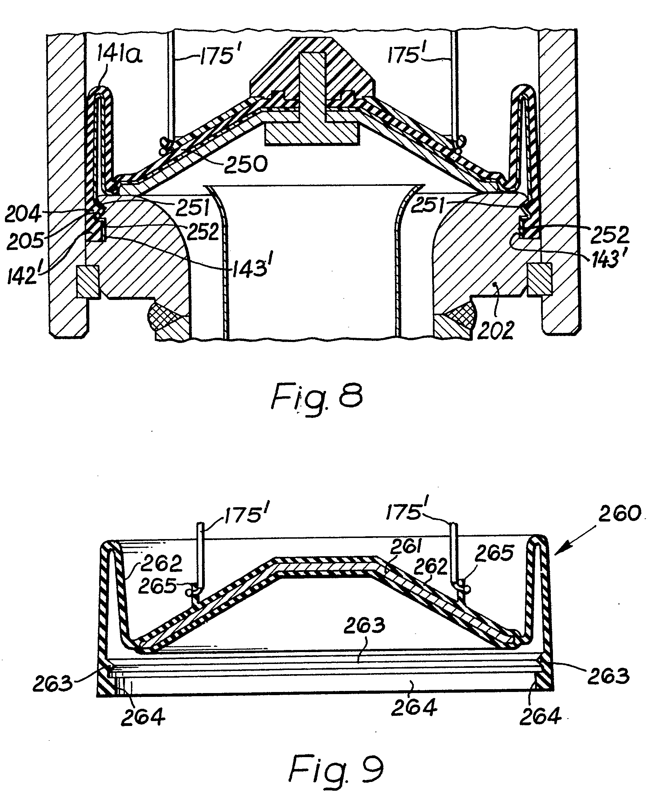

As previously mentioned, the handling of some fluids is particularly difficult because of corrosive or other chemical characteristics. The Fig. 8 construction provides a slightly modified construction which is identical to the accumulator 200 of Fig. 5 except for the addition of a thin protective, flexible sheet 250 secured between the lower conically-shaped plate and the diaphragm 141a so as to protect the diaphragm 141a from liquid contact. The sheet 250 should preferably be made of a material which essentially exhibits no tendency to react with any fluid expected to flow through the accumulator. Flexible Teflon sheet has been found especially suited for this purpose. The sheet 250 lies against and protects the diaphragm 141a on its inside surface adjacent the lower conically-shaped plate. The sheet 250 has an anchorage rib 251 which mates with the anchorage rib 204 of the diaphragm 141a and resides in the anchorage groove 205 in the base block 202. Also, the sheet 250 has an annular bead 252 which mates with annular bead 142' and fits into groove 143' in the base block 202. The Teflon sheet 250 is extremely useful in instances where the fluid being moved through the accumulator should preferably be kept out of contact with any portion of diaphragm 141'. Clinical liquids provide an example of such an application. Thus, by providing a relatively-inexpensive sheet 250 of a material which is compatible with the liquid being handled and of sufficient size so as to allow the diaphragm 141a to perform its normal function, these types of application are readily dealt with by the invention.

Fig. 9 provides a combined diaphragm and lower conically-shaped plate. Diaphragm-plate member 260 is also useful with clinical or like liquids which might otherwise react with the material of the conically-shaped plate member 261. The plate member 260 employs a moulded elastomeric material 262 arranged so as completely to surround the plate member 261. The diaphragm-plate member 260 has an anchorage rib 263 and an annular bead 264 moulded therewith. The construction of Fig. 9 is particularly useful where it is desired to reduce the amount of relatively-expensive metallic material in contact with the liquid being influenced, thus producing a substantially less-expensive apparatus for such applications. The straps 175' may be secured by appropriately shaped and moulded tabs 265.

**Claims**

1. A hydropneumatic pulse interceptor (125, 200) comprising a pressure vessel (126, 127; 201, 202; 201', 202') enclosing a flexible membrane (141, 141a, 141", 262) dividing the interior of the vessel into first and second chambers (150, 150'; 135), valve means (176, 210, 210') connecting with the first chamber (150, 150') to permit the introduction of a compressible fluid into said first chamber, substantially concentric inlet and outlet ports (136, 132; 136', 132') connecting with the second chamber (135) and adapted for connection into a line through which a substantially-incompressible fluid is able to flow into and out of said second chamber (135) to contact the membrane and thereby be subject to the influence of the compressible fluid, and an anti-extrusion plate (166, 160', 261) carried by the membrane and disposed to prevent extrusion of the membrane into said ports whilst at all times permitting flow of the substantially-incompressible fluid between the ports, characterised by a plurality of elastic members (175, 175') suspended within the vessel and attached to provide support at the side of the membrane (141, 141a, 141", 262) facing the first chamber (150, 150') so that said members (175, 175') are stretched when the membrane moves close to said inlet and outlet ports (136, 132; 136', 132') and relax when the membrane moves away from said ports.

2. A hydropneumatic pulse interceptor according to claim 1 characterised in that said elastic members are designed as straps (175, 175').

3. A hydropneumatic pulse interceptor according to claim 1 or 2 characterised in that the outlet port (132, 132') comprises a tube (130, 130') having an outwardly flared trumpet-like entrance (131, 131') within said vessel.

4. A hydropneumatic pulse interceptor according to claim 1, 2 or 3 characterised in that said anti-extrusion plate (166, 261) is a conically-shaped plate the major diameter of which exceeds the outside diameter of the inlet port (136, 136') which surrounds the outlet port (132, 132'), thereby enabling said plate to cover said ports whilst maintaining flow therebetween.

5. A hydropneumatic pulse interceptor according to any preceding claim characterised in that said membrane is a flexible diaphragm (141, 141a, 141", 262) having a peripheral edge portion held in clamped sealing relation between a base member (127, 202, 202') and a cup-shaped housing (126, 201, 201') forming said vessel (126, 127; 201, 202; 201', 202').

6. A hydropneumatic pulse interceptor according to any preceding claim further characterised by a flexible thin liquid-impervious sheet (250) disposed to protect said membrane (141a) from contact with the substantially-incompressible fluid in the second chamber.

7. A hydropneumatic pulse interceptor according to any preceding claim characterised in that said membrane (262) is formed such that said anti-extrusion plate (261) is incorporated within a central portion thereof.

## Patentansprüche

1. Hydropneumatischer Schwingungsdämpfer (125, 200) mit einem Druckbehälter (126, 127; 201, 202; 201', 202'), dessen Innenraum durch eine flexible Membran (141, 141a, 141'', 262) in eine erste und eine zweite Kammer (150, 150'; 135) geteilt ist, einem mit der ersten Kammer (150, 150') in Verbindung stehenden Ventil (176, 210, 210') zum Einführen eines kompressiblen Fluides, mit der zweiten Kammer (135) und strömungsmäßig untereinander in Verbindung stehenden etwa konzentrischen Ein- und Auslaßkanälen (136, 132; 136', 132') zum Ein- und Ausströmen eines im wesentlichen inkompressiblen Fluides in die und aus der zweiten Kammer (135), um mit der unter dem Einfluß des kompressiblen Fluides stehenden Membran in Kontakt zu treten, und mit einer von der Membran getragenen Abstützplatte (166, 160', 261), die verhindert, daß die Membran während des Durchströmens des inkompressiblen Fluides durch die Kanäle in diese hineingedrückt wird, gekennzeichnet durch eine Vielzahl von elastischen Elementen (175, 175'), die im Behälter aufgehängt und um an der zur ersten Kammer (150, 150') gerichteten Seite der Membran (141, 141a, 141'', 262) eine Halterung zu schaffen befestigt sind, so daß diese Elemente (175, 175') sich strecken, wenn sich die Membran dem Ein- und Auslaßkanal (136, 132; 136', 132') nähert und sich entspannen, wenn sich die Membran von diesen Kanälen entfernt.

2. Hydropneumatischer Schwingungsdämpfer nach Anspruch 1, dadurch gekennzeichnet, daß die elastischen Elemente Bänder (175, 175') sind.

3. Hydropneumatischer Schwingungsdämpfer nach Anspruch 1 oder 2, dadurch gekennzeichnet, daß der Auslaßkanal (132, 132') von einem Rohr (130, 130') mit einem im Behälterinneren trompetenförmig sich nach außen erweiternden Einlaß (131, 131') gebildet ist.

4. Hydropneumatischer Schwingungsdämpfer nach Anspruch 1, 2 oder 3, dadurch gekennzeichnet, daß die Abstützplatte (166, 261) eine konisch geformte Platte ist, deren Hauptdurchmesser größer als der Außendurchmesser des den Auslaßkanal (132, 132') umgebenden Einlaßkanales (136, 136') ist, so daß diese Abstützplatte die Kanäle während einer dazwischen aufrechterhaltenen Strömung überdeckt.

5. Hydropneumatischer Schwingungsdämpfer nach einem der vorhergehenden Ansprüche, dadurch gekennzeichnet, daß die Membran ein flexibles Diaphragma (141, 141a, 141'', 262) mit einem Umfangsrand ist, der zwischen einem den Behälter (126, 127; 201, 202; 201', 202') bildenden Basisteil (127, 202, 202') und einem haubenförmigen Gehäuse (126, 201, 201') abgedichtet eingeklemmt ist.

6. Hydropneumatischer Schwingungsdämpfer nach einem der vorhergehenden Ansprüche, gekennzeichnet durch eine flexible, dünne flüssigkeitsdichte Folie (250) zum Schutz der Membran gegenüber einer Berührung durch das inkompressible Fluid in der zweiten Kammer.

7. Hydropneumatischer Schwingungsdämpfer nach einem der vorhergehenden Ansprüche, dadurch gekennzeichnet, daß die Abstützplatte (261) im Innern eines zentralen Bereiches der Membran (262) ausgebildet ist.

## Revendications

1. Intercepteur d'impulsions hydropneumatiques (125, 200) comprenant une enceinte de pression (126, 127; 201, 202; 201', 202') contenant une membrane flexible (141, 141a, 141'', 262) divisant l'intérieur de l'enceinte en une première et une seconde chambres (150, 150'; 135), des moyens formant clapet (176, 210, 210') reliés à la première chambre (150, ·150') poure permettre l'introduction d'un fluide compressible dans ladite première chambre, des orifices d'entrée et de sortie (136, 132; 136', 132') sensiblement concentriques, reliés à la seconde chambre (135) et aptes à être reliés pour former une conduite par laquelle peut passer un fluide sensiblement incompressible pour pénétrer dans et sortir de la seconde chambre (135), entrer en contact avec la membrane et être ainsi soumis à l'influence du fluide compressible, et une plaque anti-extrusion (166, 160', 261) portée par la membrane et aménagée pour éviter l'extrusion de la membrane dans lesdits orifices tout en permettant à tout moment le passage du fluide sensiblement incompressible entre les orifices, caractérisé par une pluralité d'organes élastiques (175, 175') suspendus à l'intérieur de l'enceinte et fixés en vue de fournir un support sur le côté de la membrane (141, 141a, 141'', 262) qui est face à la première chambre (150, 150') de manière que lesdits organes (175, 175') soient étirés lorsque la membrane se rapproche desdits orifices d'entrée et de sortie (136, 132; 136', 132') et se détendent lorsque la membrane s'éloigne desdits orifices.

2. Intercepteur d'impulsions hydropneumatiques selon la revendication 1, caractérisé en ce que lesdits organes élastiques sont constitués sous forme de sangles (175, 175').

3. Intercepteur d'impulsions hydropneumatiques selon la revendication 1 ou 2, caractérisé en ce que l'orifice de sortie (132, 132' comprend un tube (130, 130') sont l'entrée (131, 131') en forme de trompette va en s'évasant vers l'extérieur à l'intérieur de ladite enceinte.

4. Intercepteur d'impulsions hydropneumatiques selon la revendication 1, 2 ou 3, caractérisé en ce que ladite plaque anti-extrusion (166, 261) est une plaque de forme conique dont le grand diamètre dépasse le diamètre externe de l'orifice d'entrée (136, 136') qui entoure l'orifice de sortie (132, 132'), permettant ainsi à ladite plaque de recouvrir lesdits orifices tout en maintenant le courant entre eux.

5. Intercepteur d'impulsions hydropneumatiques selon l'une quelconque des revendications précédentes, caractérisé en ce que ladite membrane est un diaphragme flexible (141, 141a, 141'', 262) comportant une partie de rebord périphérique maintenue serrée de façon étanche entre un organe de base (127, 202, 202') et une enveloppe en forme de cuvette (126, 202, 201') constituant ladite enceinte (126, 127; 201, 202; 201', 202').

6. Intercepteur d'impulsions hydropneumatiques selon l'une quelconque des revendications précédentes, caractérisé par une feuille flexible, mince et imperméable aux liquides (250) disposée de manière à protéger ladite membrane (141a) de tout contact avec le fluide sensiblement incompressible dans la seconde chambre.

7. Intercepteur d'impulsions hydropneumatiques selon l'une quelconque des revendications précédentes, caractérisé en ce que ladite membrane (262) est conformée de manière que ladite plaque anti-extrusion (261) soit incorporée à l'intérieur d'une partie centrale de celle-ci.

LIQUID SOURCE *10* → INVENTION HYDROPNEUMATIC ACCUMULATOR *15* → POSITIVE DISPLACEMENT PUMP *11* → SMOOTHED SINUSOIDAL FLOW → TO LIQUID UTILISING SYSTEM *12*

Fig. 1

LIQUID SOURCE *10* → (FROM METERING PUMP (e.g. CATALYST) *20*, FROM METERING PUMP (e.g. COLOUR) *21*) → INVENTION HYDROPNEUMATIC ACCUMULATOR *15* → PULSE ELIMINATED AND MIXED FLOW → TO LIQUID UTILISING SYSTEM *12*

Fig. 2

Fig. 3

Fig. 4

*Fig. 5*

Fig. 6

Fig. 7

Fig. 8

Fig. 9